# EUROPEAN PATENT APPLICATION

(11) **EP 3 064 093 A1**
(43) Date of publication of application: **07.09.2016**
(21) Application number: 16386004.2
(22) Date of filing: 24.02.2016
(51) Int. Cl.: A47F 5/08, B32B 17/10, B32B 3/14

(54) **GLASS SPEARATOR FOR PRODUCT DISPAYING**

(30) Priority: 02.03.2015 GR 20150100081
(71) Applicant: Dimitrios Kanellos - Eleni Kanellou General Partnership, 13671 Aharne (GR)
(72) Inventor: KANELLOS, Dimitrios, 15234 Vrilissia (GR)

(57) **Abstract**

A glass separator for product displaying consisting of triplex safety glazing (1) (2) with welded chamfered glass strips (4) thereon, namely sharpened on one side along at an angle and on the other side following a straight grinding process keeping a proportional clearance between each other and an established holder for the mounting components of product displaying.

The advantage of this invention is both the support of products with variable position and ability to install different supporting types along with the total transparency of the constriction in the area without visible holes or other holders for product displaying.

## Description

The invention relates to a versatile glass separator for displaying any products and goods. It consists of a safety glass served as a base and certain chamfered glass adhesive stripes. The product displaying separators use hitherto holes on the glass or additional metal rails or bonded components to specific static points for supporting the shelving components. Moreover, similar systems use a wooden base surface and a detachable metallic component inside the wood for supporting the holders of product displaying separators with variable position inversion but without transparency because the base is not transparent.

The advantages of this invention are both the support of products with variable position and ability to install different types of holders along with the total transparency of the structure on either side of the space without visible holes or other metallic parts to mount the holders or shelves for product displaying.

Furthermore, due to the nature of glass welding selected by the triplex method and the variable glazing selection, the spatial-system may acquire any texture, color, transparency or translucency, resistance and protection from UV, as well as any size and geometric shape. Another advantage of the invention is that it may be manufactured in pieces and assembled in any desirable size to be covered with the spatial construction within the space for displaying products and the space separation if needed.

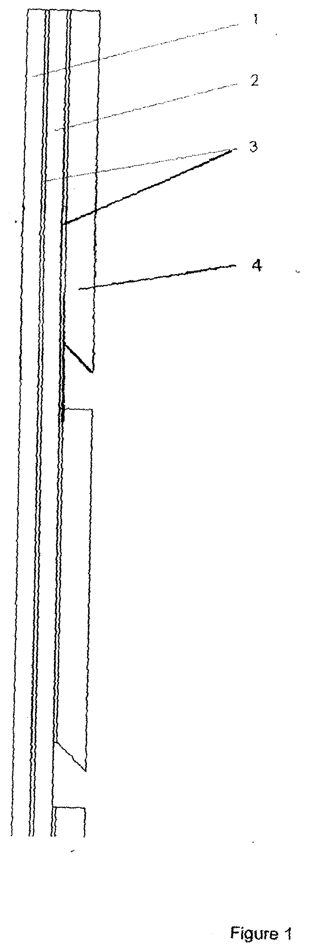

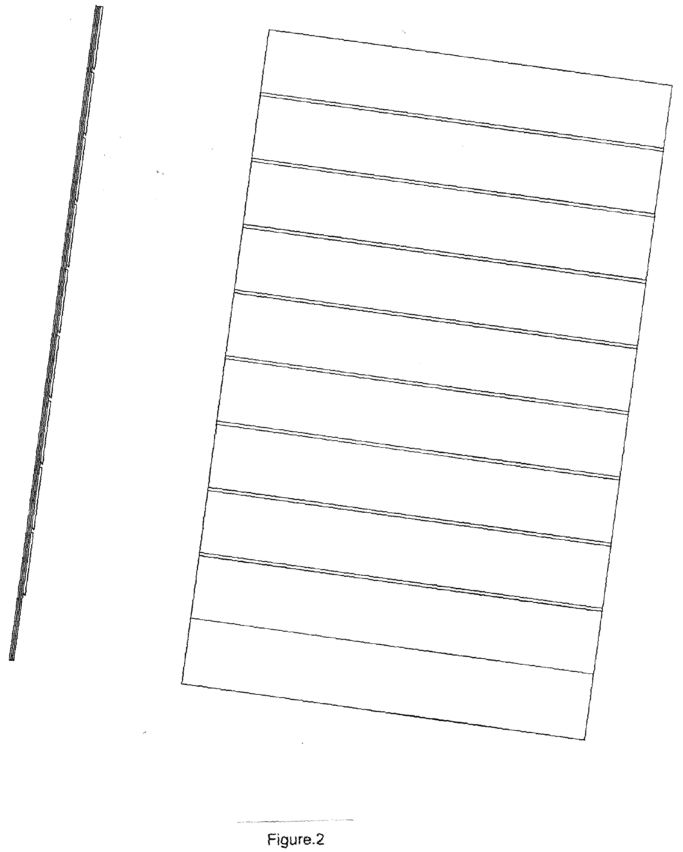

The spatial system related to the present invention consists of a glass (1) (2) manufactured by the triplex method, i.e. nested polyvinyl-butyral membranes (3) of one or more glasses (4) which, once welded are pressed and fired in specially designed ovens in order to be incorporated in any thickness, size and color of your choice. The triplex glass (1) (2) constitutes the back of the construction whereon will be welded the glass strips (4). These glass strips under the thickness, dimensions, color and transparency of our choice have on one side undergone a chamfering processing, i.e. grinding at an angle for establishing an appropriate longitudinal groove and on the other side a straight grinding treatment. Thereafter, the strips (4) are placed on the surface of the glass (2) with membrane (3) as shown in figure 1 and figure 2. In figure 1 we see a detail of partial construction.

In figure 2 on the left of the page we see a section of the construction and to the right of the page a view of the construction.

Finally, the glass line strips (4) are welded pursuant to triplex method on the glass (2) which constitutes the back of the structure.

The chamfered side of each strip is facing the straight sharpened side of the next one, whereas the space left between both strips depends on the specific holder of products.

## Claims

1. The displaying product crystal separator consisting of a safety glass (1) (2) welded pursuant to triplex process of two or more crystals, being the back of the structure, with crystalline strips (4) welded on the surface thereof which are **characterized by** the grinding process at an angle along the one side and on the other side by the grinding process lengthways.

2. The displaying product crystal separator according to claim I. is **characterized by** the chamfered side of each strip (4) facing the straight sharpened side of the next one, whereas the space left between both strips depends on each products' component.

3. The displaying product crystal separator according to claim II is **characterized by** the groove established between the chamfered side of the strip and the straight side of the other strip with the surface of the safety glazing as provides a specific clearance for the mounting of projected products' support components.
